# EUROPEAN PATENT SPECIFICATION

(11) **EP 2 208 862 B1**
(45) Date of publication and mention of the grant of the patent: **17.05.2017**
(21) Application number: 10150611.1
(22) Date of filing: 13.01.2010
(51) Int. Cl.: F01D 11/24

(54) **Compressor clearance control system and method for providing clearance control**
Vorrichtung und Verfahren zur Kontrolle des Schaufelspitzenspiels eines Verdichters
Dispositif et procédé de contrôle du jeu d'un compresseur

(30) Priority: 15.01.2009 US 354049
(43) Date of publication of application: 21.07.2010
(73) Proprietor: General Electric Company, Schenectady, NY 12345 (US)
(72) Inventor: Tillery, Steven W., Simpsonville, SC 29681 (US); Flanagan, Mark W., Simpsonville, SC 29681 (US); Snider, David A., Simpsonville, SC 29681 (US)
(74) Representative: Cleary, Fidelma

(56) References cited:
- EP-A2- 1 630 385
- US-A- 2 655 308
- US-A- 5 167 487
- US-A- 5 605 437
- US-A1- 2006 225 430
- US-B2- 7 293 953

## Description

### TECHNICAL FIELD

The present application relates generally to gas turbine engines and more particularly relates to a compressor clearance control system for providing front end rotor blade clearance or other types of clearance control through the use of turbine exhaust gases.

### BACKGROUND OF THE INVENTION

When overall power demand is low, power producers often turn their power generation equipment to a low power level so as to conserve fuel. In the case of a gas turbine engine, the inlet guide vanes about a compressor inlet may be closed to a minimum angle so as to reduce the airflow therethrough and the overall power output. Specifically, the air passing through the inlet guide vanes may experience a significant pressure drop at the low inlet guide vane angles. The front end of the compressor essentially acts as a turbine and extracts energy from the airflow in a phenomenon called turbining. The low pressure thus may cause the temperature of the airflow about the compressor inlet casing to drop quickly. Such low temperatures may require more steady state clearances between the casing and the rotor blades to allow for stabilization.

Because the metal casing of the compressor has a slower thermal response time than the rotor blades, the rotor blades may expand faster than the casing so as to cause the rotor blades to close in on the casing and potentially rub thereagainst when in transition to higher loads or in an overspeed condition. Rubbing may cause early rotor blade damage and possible failure. As a result, operational rotor blade/casing clearances must accommodate these differing expansion rates. These clearances effect and thereby limit the amount of core flow that may be pulled into the compressor.

US 2006/225430 describes a system and method for actively controlling compressor clearances in a turbine engine by passing a thermal fluid in heat exchanging relation through a compressor vane carrier. During some operational conditions, such as hot restart or spin cool, it may be desirable to heat the vane carrier to enlarge or at least prevent a decrease in compressor clearances. In such cases, a heated thermal fluid is provided, by reclaiming residual exhaust energy from a heat recovery steam generator. At any condition where improved performance is desired, such as at base load operation, the vane carrier is cooled to minimize compressor clearances.

US 7293953 describes an active clearance control system is provided that uses compressor extraction air to manipulate blade tip clearance in an industrial gas turbine and compressor. A stream of air is taken from a cooling and sealing air circuit and redirected, to be used for active clearance control. The spent clearance control air is reintroduced into the hot gas path of the gas turbine for cooling and sealing purposes.

US 2655308 describes means for preventing the formation of ice on the intake components and blades of air compressors used in aircraft gas turbine engines wherein a dark coloured finish is applied to surfaces of the compressor that are exposed to the air stream and by providing heat-producing means to project radiant heat on to the surfaces having the dark coloured finish.

There is therefore a desire for improved clearance control systems and methods for a compressor so as to improve overall gas turbine engine performance and efficiency. Preferably, the improved compressor clearance control systems and methods also should address turbining during low or no load conditions as well rotor blade rubbing during load transitions. Specifically, reducing the range of clearances over the operating regime without the danger of not enough clearances (rubbing, damage) or the danger of too much clearance (loss of performance, stall, damage).

### SUMMARY OF THE INVENTION

The present invention resides in a compressor clearance control system for a gas turbine engine and in a method of providing clearance control for a gas turbine as defined in the appended claims.

These and other features and improvements of the present application will become apparent to one of ordinary skill in the art upon review of the following detailed description when taken in conjunction with the several drawings and the appended claims.

### BRIEF DESCRIPTION OF THE DRAWINGS

There follows a detailed description of embodiments of the invention by way of example only with reference to the accompanying drawings, in which:
Fig. 1 is a schematic view of a known gas turbine engine.
Fig. 2 is a cross-sectional view of a rotor blade positioned about a compressor casing;
Fig. 3 is a schematic view of a gas turbine engine with a compressor clearance control system as is described herein; and
Fig. 4 is a schematic view of a gas turbine engine with an alternative embodiment of the compressor clearance control system as is described herein.

### DETAILED DESCRIPTION

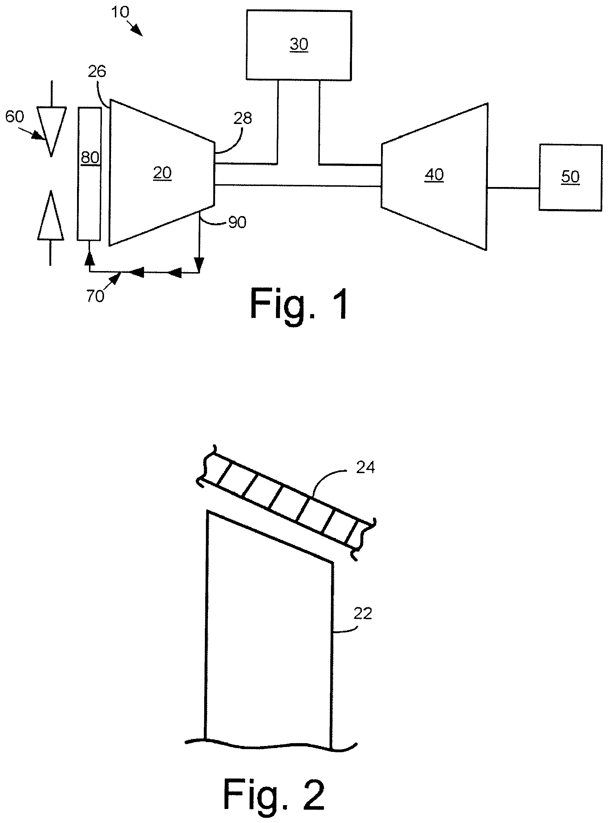

Referring now to the drawings in which like numerals refer to like elements throughout the several views, Figs. 1 and 2 show a schematic view of a gas turbine engine 10. As is known, the gas turbine engine 10 may include a compressor 20 to compress an incoming flow of air. The compressor 20 includes a number of rotor blades 22 positioned within a casing 24. The compressor 20 delivers the compressed flow of air to a combustor 30. The combustor 30 mixes the compressed flow of air with a flow of fuel and ignites the mixture. (Although only a single combustor 30 is shown, the gas turbine engine 10 may include any number of combustors 30.) The hot combustion gases are in turn delivered in turn to a turbine 40. The hot combustion gases drive the turbine 40 so as to produce mechanical work. The mechanical work produced in the turbine 40 drives the compressor 20 and an external load 50 such as an electrical generator and the like. The gas turbine engine 10 may use natural gas, various types of syngas, and other types of fuels.

The gas turbine engine 10 may be a 9FA turbine or a similar device offered by General Electric Company of Schenectady, New York. Other types of gas turbine engines 10 may be used herein. The gas turbine engine 10 may have other configurations and use other types of components. Multiple gas turbine engines 10, other types of turbines, and/or other types of power generation equipment may be used together.

Load control for the gas turbine engine 10 may be possible in part through the use of a number of inlet guide vanes 60 positioned about an inlet 26 of the compressor 20. Specifically, the output of the gas turbine engine 10 may be modulated by changing the position of the inlet guide vanes 60 so as to vary the amount of air entering the compressor 20.

The gas turbine engine 10 also may use an inlet bleed heat system 70 to heat the inlet air. The inlet bled heat system 70 may be positioned upstream of the inlet of the compressor 20 in a filter housing or elsewhere. As is known, the inlet bleed heat system 70 may include an inlet bled heat manifold 80 positioned upstream of the inlet 26 of the compressor 20. The inlet bled heat manifold 80 may be in communication with an extraction port 90 of compressed air from a compressor outlet 28. The air from the extraction port 90 passes through the inlet bled heat manifold 80 so as to warm the incoming air flow. Warming the incoming air flow aids in limiting the implications of turbining (i.e., casing shrinkage resulting in blade rubbing). Other methods and configurations may be used herein.

The efficiency of the compressor cycle, however, may be compromised by extracting the compressed air from the outlet 28 of the compressor 20 and using it to heat the inlet air flow. As such, overall gas turbine engine efficiency likewise may be reduced. Likewise, other types of turbines may not use an inlet bled heat system 70 while suppressed inlet temperatures may remain an issue.

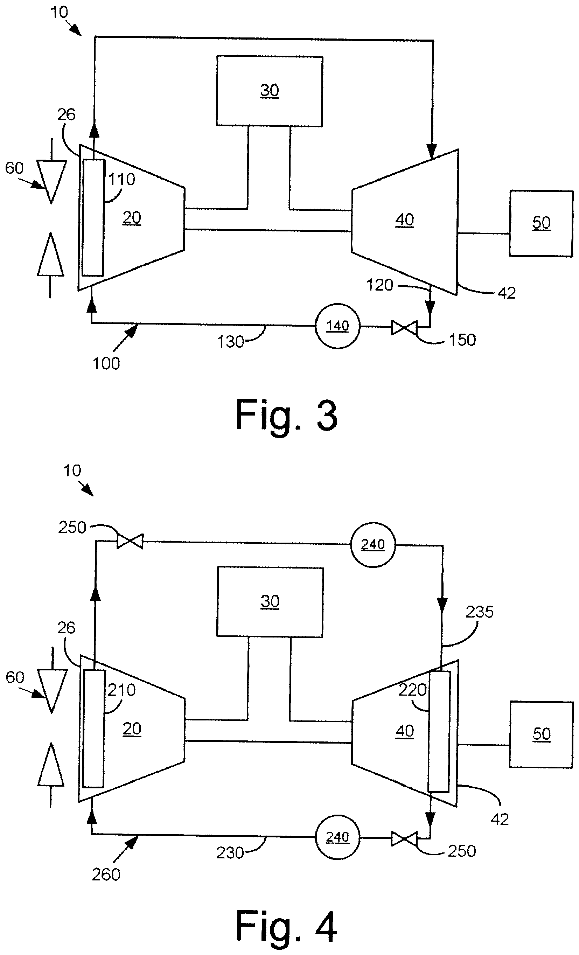

Fig. 3 shows a compressor clearance control system 100 as is described herein. The compressor clearance control system 100 may be installed within the gas turbine engine 10 as described above. The compressor clearance control system 100 likewise may be used with other types of turbine systems.

The compressor clearance control system 100 may include a compressor casing heat exchanger 110. The casing heat exchanger 110 may be any type of heat exchanger that transfers heat to the casing 24 of the compressor 20 about the inlet 26 or otherwise. The compressor casing heat exchanger 110 may be used in any stage or in any position. The compressor clearance control system 100 further includes an extraction port 120 about an outlet 42 of the turbine 40 downstream of all of the turbine stages. Specifically, hot exhaust gases from the outlet 42 of the turbine 40 may be removed via the extraction port 120. The hot exhaust gases from the extraction port 120 may be in communication with the casing heat exchanger 110 via one or more conduits 130. After passing through the casing heat exchanger 110, the gases then may be vented or piped back to the exhaust at the turbine outlet 42 with little impact on the overall bulk exhaust temperature. A pump 140 may be positioned about the conduit 130 if needed. Likewise, one or more valves 150 may be positioned on the conduit 130 as may be required.

The heat from the hot exhaust gases of the turbine 40 is thus transferred to the metal of the casing 24 about the inlet 26 of the compressor 20. As such, shrinkage or thermal contraction of the casing 24 of the compressor 20 may be controlled so as to avoid rubbing by the rotor blades 22. Likewise, expansion of the casing 24 may be promoted. The compressor clearance control system 100 thus may be used when the inlet guide vanes 60 are close to or about at a minimum angle due to, for example, low load or no load conditions. Likewise, the compressor clearance control system 100 may be used in cold ambient conditions and during load transitions. The gas turbine engine 10 thus may be turned down to a lower power with less of a chance for rotor blade rubbing due to turbining. Likewise, the inlet guide vanes 60 may be closed to a lower angle so as to turn down even further the power output.

The compressor clearance control system 100 not only permits lower turndown, but also may promote higher overall power output. Overall operational rotor blade tip clearances may be tightened given the increased controllability over the casing temperature via longer rotor blades 22. Specifically, tightening the rotor blade clearances should result in a power output increase. The improvement will vary greatly for different types of turbines. Moreover, the compressor clearance control system 100 uses waste heat from the turbine 40 so as to limit the efficiency penalty associated with known inlet bleed heat systems and other known techniques.

The compressor clearance control system 100 may be installed in new or existing gas turbine engines 10. The compressor clearance control system 100 may be used on any machine where turbining or active clearance control may be an issue.

Fig. 4 shows a further embodiment of a compressor clearance control system 200. This embodiment also includes a casing heat exchanger 210 positioned on the casing 24 of the compressor 20 about the inlet 26. The compressor clearance control system 200 also includes a turbine exhaust heat exchanger 220. The turbine exhaust heat exchanger 220 may be positioned about the outlet of the turbine 40 or other type of downstream exhaust system for heat exchange therewith. The casing heat exchanger 210 of the compressor 20 and the turbine exhaust heat exchanger 220 of the turbine 40 may be in communication via one or more conduits 230. The conduit 230 may have a conventional refrigeration fluid or other type of working fluid 235 therein for circulation from the turbine exhaust heat exchange 220 to the casing heat exchanger 210 and back. One or more pumps 240 may be positioned about the conduit 230. Likewise, one or more valves 250 may be positioned thereon.

The working fluid 235 may be heated in the turbine exhaust heat exchanger 220 via the turbine exhaust and then circulated through the casing heat exchanger 210 about the casing 24 of the compressor 200 so as to exchange heat with the metal of the casing 24. The working fluid 235 then may be circulated back to the turbine exhaust heat exchanger 220. Other types of heat circulation systems likewise may be used herein.

## Claims

1. A compressor clearance control system (100) for a gas turbine engine (10), comprising:
a compressor (20) with a casing (24) and a number of rotor blades (26);
inlet guide vanes (60) positionable to vary the amount of air entering the compressor (20);
a casing heat exchanger (110) positioned about the casing (24) of the compressor (20);
a turbine (40) producing exhaust gases; and
a turbine exhaust heat exchanger (220) positioned about an outlet (42) of the turbine (40), the turbine exhaust heat exchanger (220) being in communication with the casing heat exchanger (110) and being arranged to heat a working fluid (235) therein for circulation between the turbine exhaust heat exchanger (220) and the casing heat exchanger (110) to heat the casing (24) when the inlet guide vanes (60) are in a position that causes turbining of the compressor (20).

2. The compressor clearance control system of claim 1, wherein the casing heat exchanger (110) and the turbine exhaust heat exchanger (220) are in communication via one or more conduits (130).

3. The compressor clearance control system of claim 2, further comprising a pump (140) positioned on the one or more conduits (130).

4. The compressor clearance control system of claim 2 or 3, further comprising a valve (150) positioned on the one or more conduits (130).

5. A method of providing clearance control for a gas turbine engine (10) having a turbine (40) producing exhaust gases, a compressor (20) with a casing (24) and a number of rotor blades (26), and inlet guide vanes (60) positionable to vary the amount of air entering the compressor (20), comprising:
positioning a casing heat exchanger (110) about the casing (24);
rotating the number of rotor blades (26) within the casing (240;
positioning a turbine exhaust heat exchanger (220) about an outlet (42) of the turbine (40) and heating a working fluid (235) therein via the turbine exhaust; and
circulating the working fluid (235) between the turbine exhaust heat exchanger (220) and the casing heat exchanger (110) so as to exchange heat with the metal of the casing (24) to heat the casing (24) when the inlet guide vanes (60) are in a position that causes turbining of the compressor (20).

6. The method of claim 5, further comprising reducing a clearance between the casing (24) and the number of rotor blades (26) by increasing the size of the number of rotor blades (26).

## Patentansprüche

1. Kompressorspalt-Steuersystem (100) für einen Gasturbinenmotor (10), umfassend:
einen Kompressor (20) mit einem Gehäuse (24) und einer Anzahl von Rotorschaufeln (26);
Einlass-Leitschaufeln (60), die so positioniert werden können, dass die Menge der Luft, die in den Kompressor (20) gelangt, verändert wird;
einen Gehäuse-Wärmeaustauscher (110), der um das Gehäuse (24) des Kompressors (20) herum positioniert ist;
eine Turbine (40), die Abgase erzeugt; und
einen Turbinenabgas-Wärmeaustauscher (220), der um einen Auslass (42) der Turbine (40) herum angeordnet ist, wobei der Turbinenabgas-Wärmeaustauscher (220) in einer Verbindung mit dem Gehäuse-Wärmeaustauscher (110) steht und so eingerichtet ist, dass er ein darin befindliches Arbeitsfluid (235) zur Zirkulation zwischen dem Turbinenabgas-Wärmeaustauscher (220) und dem Gehäuse-Wärmeaustauscher (110) erwärmt, um das Gehäuse (24) zu erwärmen, wenn sich die Einlass-Leitschaufeln (60) in einer Position befinden, die eine Turbinenarbeit des Kompressors (20) verursacht.

2. Kompressorspalt-Steuersystem nach Anspruch 1, wobei der Gehäuse-Wärmeaustauscher (110) und der Turbinenabgas-Wärmeaustauscher (220) über eine oder mehrere Leitungen (130) in Verbindung stehen.

3. Kompressorspalt-Steuersystem nach Anspruch 2, ferner umfassend eine Pumpe (140), die an der einen oder den mehreren Leitungen (130) positioniert ist.

4. Kompressorspalt-Steuersystem nach Anspruch 2 oder 3, ferner umfassend ein Ventil (150), das an der einen oder den mehreren Leitungen (130) positioniert ist.

5. Verfahren zur Bereitstellung einer Spaltsteuerung für einen Gasturbinenmotor (10), der eine Turbine (40), die Abgase erzeugt, einen Kompressor (20) mit einem Gehäuse (24) und einer Anzahl von Rotorschaufeln (26), und Einlass-Leitschaufeln (60), die so positioniert werden können, dass die Menge der Luft, die in den Kompressor (20) gelangt, verändert wird, aufweist, umfassend:
Positionieren eines Gehäuse-Wärmeaustauschers (110) um das Gehäuse (24);
Drehen der Anzahl von Rotorschaufeln (26) in dem Gehäuse (240;
Positionieren eines Turbinenabgas-Wärmeaustauschers (220) um einen Auslass (42) der Turbine (40) und Erwärmen eines darin befindlichen Arbeitsfluids (235) über das Turbinenabgas; und
Zirkulieren des Arbeitsfluids (235) zwischen dem Turbinenabgas-Wärmeaustauscher (220) und dem Gehäuse-Wärmeaustauscher (110), so dass Wärme mit dem Metall des Gehäuses (24) ausgetauscht wird, um das Gehäuse (24) zu erwärmen, wenn sich die Einlass-Leitschaufeln (60) in einer Position befinden, die eine Turbinenarbeit des Kompressors (20) verursacht.

6. Verfahren nach Anspruch 5, ferner umfassend das Verkleinern eines Spalts zwischen dem Gehäuse (24) und der Anzahl von Rotorschaufeln (26) durch Vergrößern der Größe der Anzahl der Rotorschaufeln (26).

## Revendications

1. Système de commande de jeu de compresseur (100) pour un moteur à turbine à gaz (10), comprenant :
un compresseur (20) avec un carter (24) et un certain nombre de pales de rotor (26) ;
des aubes de guidage d'entrée (60) positionnables pour modifier la quantité d'air pénétrant dans le compresseur (20) ;
un échangeur de chaleur de carter (110) positionné autour du carter (24) du compresseur (20) ;
une turbine (40) produisant des gaz d'échappement ; et
un échangeur de chaleur d'échappement de turbine (220) positionné autour d'une sortie (42) de la turbine (40), l'échangeur de chaleur d'échappement de turbine (220) étant en communication avec l'échangeur de chaleur de carter (110) et étant agencé pour y chauffer un fluide de travail (235) afin d'assurer une circulation entre l'échangeur de chaleur d'échappement de turbine (220) et l'échangeur de chaleur de carter (110) pour chauffer le carter (24) lorsque les aubes de guidage d'entrée (60) se trouvent dans une position qui provoque un turbinage du compresseur (20).

2. Système de commande de jeu de compresseur selon la revendication 1, dans lequel l'échangeur de chaleur de carter (110) et l'échangeur de chaleur d'échappement de turbine (220) sont en communication via un ou plusieurs conduits (130).

3. Système de commande de jeu de compresseur selon la revendication 2, comprenant en outre une pompe (140) positionnée sur les un ou plusieurs conduits (130).

4. Système de commande de jeu de compresseur selon la revendication 2 ou 3, comprenant en outre une vanne (150) positionnée sur les un ou plusieurs conduits (130).

5. Procédé de fourniture d'une commande de jeu pour un moteur à turbine à gaz (10) ayant une turbine (40) produisant des gaz d'échappement, un compresseur (20) avec un carter (24) et un certain nombre de pales de rotor (26), et des aubes de guidage d'entrée (60) positionnables pour modifier la quantité d'air entrant dans le compresseur (20), comprenant :
le positionnement d'un échangeur de chaleur de carter (110) autour du carter (24) ;
la rotation du nombre de pales de rotor (26) dans le carter (240 ;
le positionnement d'un échangeur de chaleur d'échappement de turbine (220) autour d'une sortie (42) de la turbine (40) et le chauffage d'un fluide de travail (235) qui s'y trouve via l'échappement de la turbine ; et
la mise en circulation du fluide de travail (235) entre l'échangeur de chaleur d'échappement de turbine (220) et l'échangeur de chaleur de carter (110) de manière à échanger de la chaleur avec le métal du carter (24) pour chauffer le carter (24) lorsque les aubes de guidage d'entrée (60) sont dans une position qui provoque un turbinage du compresseur (20).

6. Procédé selon la revendication 5, comprenant en outre la réduction d'un jeu entre le carter (24) et le nombre de pales de rotor (26) en augmentant la taille du nombre de pales de rotor (26).
